# EUROPEAN PATENT SPECIFICATION

(11) **EP 4 315 758 B1**
(45) Date of publication and mention of the grant of the patent: **29.07.2026**
(21) Application number: 21939671.0
(22) Date of filing: 07.05.2021
(51) Int. Cl.: H04L 12/18

(54) **A METHOD OF ESTABLISHING MULTICAST BROADCAST SERVICE SESSION, AND SYSTEM AND APPARATUS THEREOF**
VERFAHREN ZUR HERSTELLUNG EINER MULTICAST-BROADCAST-DIENSTSITZUNG SOWIE SYSTEM UND VORRICHTUNG DAFÜR
PROCÉDÉ D'ÉTABLISSEMENT D'UNE SESSION SE SERVICE DE MULTIDIFFUSION/DIFFUSION, ET SYSTÈME ET APPAREIL ASSOCIÉS

(43) Date of publication of application: 07.02.2024
(73) Proprietor: ZTE Corporation, Shenzhen, Guangdong 518057 (CN)
(72) Inventor: LI, Zhendong, Shenzhen, Guangdong 518057 (CN); ZHU, Jinguo, Shenzhen, Guangdong 518057 (CN)
(74) Representative: Vossius & Partner Patentanwälte Rechtsanwälte mbB
(86) International application number: PCT/CN2021/092109
(87) International publication number: WO 2022/233024

(56) References cited:
- WO-A1-2021/038277
- CN-A- 111 556 539
- "3rd Generation Partnership Project; Technical Specification Group Services and System Aspects; Architectural enhancements for 5G multicast-broadcast services; Stage 2; (Release 17)", vol. SA WG2, no. V0.2.0, 3 May 2021 (2021-05-03), pages 1 - 53, XP052000937, Retrieved from the Internet <URL:https://ftp.3gpp.org/Specs/archive/23_series/23.247/23247-020.zip DRAFT_23247-020_for_review r2.doc> [retrieved on 20210503]
- "3rd Generation Partnership Project; Technical Specification Group Services and System Aspects; Study on architectural enhancements for 5G multicast-broadcast services (Release 17)", vol. SA WG2, no. V17.0.0, 31 March 2021 (2021-03-31), pages 1 - 298, XP052000263, Retrieved from the Internet <URL:https://ftp.3gpp.org/Specs/archive/23_series/23.757/23757-h00.zip 23757-h00.docx> [retrieved on 20210331]
- NOKIA, NOKIA SHANGHAI BELL, HUAWEI, HISILICON: "KI#6 Update of Solution #21", 3GPP DRAFT; S2-2008099, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Electronic meeting; 20201012 - 20201023, 21 October 2020 (2020-10-21), Mobile Competence Centre ; 650, route des Lucioles ; F-06921 Sophia-Antipolis Cedex ; France , XP051948297
- "3rd Generation Partnership Project; Technical Specification Group Services and System Aspects; Study on architectural enhancements for 5G multicast-broadcast services (Release 17)", 3GPP STANDARD; TECHNICAL REPORT; 3GPP TR 23.757, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.5.0, 11 September 2020 (2020-09-11), Mobile Competence Centre ; 650, route des Lucioles ; F-06921 Sophia-Antipolis Cedex ; France , pages 1 - 231, XP051926023
- NOKIA, NOKIA SHANGHAI BELL: "KI#6 Update of Solution #21", 3GPP DRAFT; S2-2007238, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Electronic meeting; 20201012 - 20201023, 2 October 2020 (2020-10-02), Mobile Competence Centre ; 650, route des Lucioles ; F-06921 Sophia-Antipolis Cedex ; France , XP051938282

## Description

This document is directed generally to wireless communications.

Local multicast broadcast service (MBS) plays an important role in the MBS. As its name suggests, the Local MBS is an MBS provided in particular MBS area(s). The MBS area is identified by a cell list or a tracking area list. Only the user equipment (UE) within the MBS area may receive content data of the MBS. When the UE moves outside of the MBS area, the UE is not allowed to receive the local MBS.

In addition, location dependent MBS is a local MBS provided in several MBS areas. The location dependent MBS enables distributions of different content data to different MBS areas for the same MBS service.

In the existing technology, however, a session management function (SMF) does not know the correlation relationship between next generation radio access network (NG-RAN) nodes and the MBS areas when there are multiple MBS areas in the serving area of the SMF. Under such conditions, the distributions of the content data to the MBS areas may encounter problems.

3GPP TS 23.247 relates to architectural enhancements for 5G multicast-broadcast services.

3GPP TR 23.757 relates to study on architectural enhancements for 5G multicast-broadcast services.

This document relates to methods, systems, and devices for establishing the MBS session, and in particular to methods, systems, and devices for establishing the MBS session in separate MBS areas. The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a wireless communication method for use in a wireless network node. The method comprises receiving, from a session management function, a session response comprising an area identifier of a multicast broadcast service, MBS, session and location information corresponding to the area identifier.

Various embodiments may preferably implement the following features:
Preferably, the location information comprises at least one of a tracking area identity list associated with the area identifier, a cell list associated with the area identifier or a multicast address associated with the area identifier.

Preferably, the wireless communication method further comprises transmitting, to a multicast broadcast session management function of the MBS session, a request of establishing a downlink tunnel for the MBS session, wherein the message comprises the area identifier

Preferably, The wireless communication method further comprises receiving, from the multicast broadcast session management function, a response comprising a multicast address associated with the area identifier.

The present disclosure relates to a wireless communication method for use in a session management function. The method comprises:
receiving a session request associated with a multicast broadcast service, MBS, session and a wireless network node, and
transmitting, to the wireless network node, a session response comprising an area identifier of the MBS session and location information corresponding to the area identifier.

Various embodiments may preferably implement the following features:
Preferably, the wireless communication method further comprises receiving, from a multicast broadcast session management function, information of a correlation between each area identifier associated with the MBS session and corresponding location information.

Preferably, the location information comprises at least one of a tracking area identity list associated with the area identifier, a cell list associated with the area identifier or a multicast address associated with the area identifier.

The present disclosure relates to a wireless communication method for use in a multicast broadcast session management function. The method comprises transmitting, to a session management function, information of a correlation between each area identifier of a multicast broadcast service, MBS, session and corresponding location information.

Various embodiments may preferably implement the following features:
Preferably, the location information comprises at least one of a tracking area identity list associated with the area identifier, a cell list associated with the area identifier or a multicast address associated with the area identifier.

The present disclosure relates to a wireless communication method for use in a wireless network node. The method comprises transmitting, to a multicast broadcast session management function of a multicast broadcast service, MBS, session, a request of establishing a downlink tunnel for the MBS session, wherein the message comprises an area identifier of the MBS session.

Various embodiments may preferably implement the following features:
Preferably, the wireless communication method further comprises receiving, from the multicast broadcast session management function, a response comprising a multicast address associated with the area identifier.

Preferably, the request further comprises downlink tunnel information associated with the area identifier of the MBS session.

The present disclosure relates to a wireless communication method for use in a multicast broadcast session management function. The method comprises receiving, from a wireless network node, a request of establishing a downlink tunnel for a multicast broadcast service, MBS, session, wherein the message comprises an area identifier of the MBS session.

Various embodiments may preferably implement the following features:
Preferably, the wireless communication method further comprises transmitting, to the wireless network node, a response comprising a multicast address associated with the area identifier

Preferably, the request further comprises downlink tunnel information associated with the area identifier of the MBS session and the wireless communication further comprises:
selecting, based on the area identifier and the downlink tunnel information, a user plane function for transmitting downlink data of the MBS session to the wireless network node.

The present disclosure relates to a wireless network node, comprising:
a communication unit, configured to receive, from a session management function, a session response comprising an area identifier of a multicast broadcast service, MBS, session and location information corresponding to the area identifier.

Various embodiments may preferably implement the following feature:
Preferably, the wireless network node further comprises a processor configured to perform any of aforementioned wireless communication methods.

The present disclosure relates to a wireless device comprising a session management function. The wireless device comprises a communication unit, configured to:
receive a session request associated with a multicast broadcast service, MBS, session and a wireless network node, and
transmit, to the wireless network node, a session response comprising an area identifier of the MBS session and location information corresponding to the area identifier transmit data in a first period.

Various embodiments may preferably implement the following feature:
Preferably, the wireless device further comprises a processor configured to perform any of aforementioned wireless communication methods.

The present disclosure relates to wireless device comprising a multicast broadcast session management function. The wireless device comprises:
a communication unit, configured to transmit, to a session management function, information of a correlation between each area identifier of a multicast broadcast service, MBS, session and corresponding location information.

Various embodiments may preferably implement the following feature:
Preferably, the wireless device further comprises a processor configured to perform any of aforementioned wireless communication methods.

The present disclosure relates to a wireless network node, comprising:
a communication unit, configured to transmit, to a multicast broadcast session management function of a multicast broadcast service, MBS, session, a request of establishing a downlink tunnel for the MBS session, wherein the message comprises an area identifier of the MBS session.

Various embodiments may preferably implement the following feature:
Preferably, the wireless network node further comprises a processor configured to perform any of aforementioned wireless communication methods.

The present disclosure relates to a wireless device comprising a multicast broadcast session management function. The wireless device comprises:
a communication unit, configured to receive, from a wireless network node, a request of establishing a downlink tunnel for a multicast broadcast service, MBS, session, wherein the message comprises an area identifier of the MBS session.

Various embodiments may preferably implement the following feature:
Preferably, the wireless device further comprises a processor configured to perform any of aforementioned wireless communication methods.

The present disclosure relates to a computer program product comprising a computer-readable program medium code stored thereupon, the code, when executed by a processor, causing the processor to implement a wireless communication method recited in any one of foregoing methods.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
FIG. 1 shows a schematic diagram of a network architecture according to an embodiment of the present disclosure.
FIG. 2 shows a schematic diagram of a procedure according to an embodiment of the present disclosure.
FIG. 3 shows a schematic diagram of a procedure according to an embodiment of the present disclosure.
FIG. 4 shows a schematic diagram of a procedure according to an embodiment of the present disclosure.
FIG. 5 shows a schematic diagram of a procedure according to an embodiment of the present disclosure.
FIG. 6 shows a schematic diagram of a procedure according to an embodiment of the present disclosure.
FIG. 7 shows a schematic diagram of a procedure according to an embodiment of the present disclosure.
FIG. 8 shows an example of a schematic diagram of a wireless terminal according to an embodiment of the present disclosure.
FIG. 9 shows an example of a schematic diagram of a wireless network node according to an embodiment of the present disclosure.
FIG. 10 shows a flowchart of a method according to an embodiment of the present disclosure.
FIG. 11 shows a flowchart of a method according to an embodiment of the present disclosure.
FIG. 12 shows a flowchart of a method according to an embodiment of the present disclosure.
FIG. 13 shows a flowchart of a method according to an embodiment of the present disclosure.
FIG. 14 shows a flowchart of a method according to an embodiment of the present disclosure.

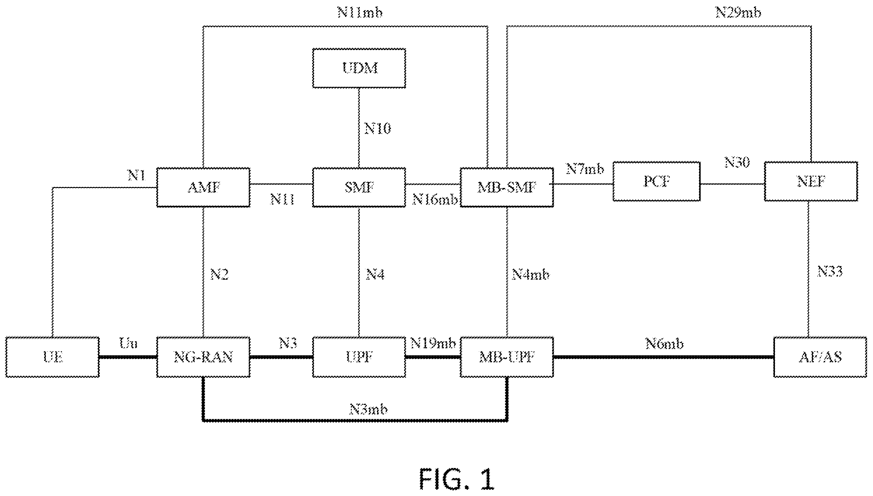

FIG. 1 shows a schematic diagram of a network architecture according to an embodiment of the present disclosure. The network architecture may provide the MBS. There are two types of MBS session: Broadcast MBS session and Multicast MBS session. In an embodiment, the MBS session refers to the multicast MBS session in the present disclosure. The network architecture shown in FIG. 1 comprises two types of network functions, i.e., common network functions and MBS particular network functions, which are illustrated in the following.

### Common network functions:

1. User equipment (UE) accessing 5^{th} generation system (5GS) obtains services via an NG-RAN and interacts with an Access and Mobility Control Function (AMF) of the core network via NAS signaling.
2. NG-RAN (i.e. 5G Radio Access Network)
   The NG-RAN is responsible for air interface resource scheduling and air interface connection management of the network to which the UE accesses. In the present disclosure, the NG-RAN (node) may refer to RAN (node).
3. AMF (Access and Mobility Management function)
   The AMF includes the following functionalities: registration management, connection management, reachability management and mobility management. The AMF also performs the access authentication and access authorization. The AMF is the NAS security termination and relays the SM NAS between the UE and the SMF, etc.
4. SMF (Session Management function)
   The SMF includes the following functionalities: session management (e.g. session establishment, modify and release), UE internet protocol (IP) address allocation & management, selection and control of user plane (UP) function, downlink data notification, etc.
5. UPF (User plane function)
   The UPF includes the following functionalities: anchor point for intra-/inter-RAT mobility, packet routing & forwarding, traffic usage reporting, quality of service (QoS) handling for the UP, downlink packet buffering and downlink data notification triggering, etc.
6. UDM (Unified Data Management)
   The UDM manages the subscription profile for the UEs. The subscription includes the data used for mobility management, session management. The AMF and SMF get the subscription from the UDM.
7. PCF (Policy Control Function)
   The PCF includes the following functionality: supporting unified policy framework to govern network behavior and providing policy rules to control plane function(s) to enforce the policy rules.
8. NEF (Network Exposure Function)
   The NEF is deployed optionally for exchanging information between the 5G core network (5GC) and an external third party.
9. AF/AS (Application Function/Application Server).

The AF/AS provides the services over the 5GS.

### MBS particular network functions:

### 1. MB-SMF (multicast-broadcast SMF)

The MB-SMF is responsible for MBS session management, including: QoS control, configuring the MB-UPF, interacting with SMF to modify PDU session associated with MBS session, interacting with RAN (via AMF and SMF) to establish data transmission resources between MB-UPF and RAN nodes, etc.

### 2. MB-UPF (multicast-broadcast UPF)

The MB-UPF is responsible for packet filtering of incoming downlink packets for multicast and broadcast flows, QoS enforcement, delivery of multicast and broadcast data to the RAN nodes, etc.

For the multicast MBS session, the UE needs to join the multicast MBS session before receiving multicast service data.

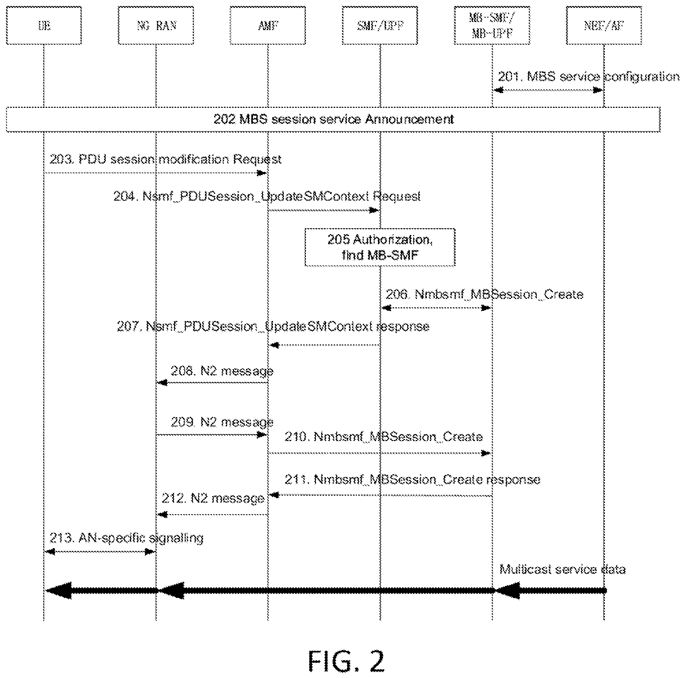

FIG. 2 shows a schematic diagram of a procedure according to an embodiment of the present disclosure. FIG. 2 briefly illustrates how the UE joins the multicast MBS session.

In step 201, the AF requests the multicast MBS to the NEF (including service requirements). The NEF finds an MB-SMF, which can control the corresponding MBS session. The MB-SMF allocates an MBS session ID for the MBS and responds to the NEF/AF.

In step 202, the MBS session service announcement is sent to the UE, where the MBS session service announcement includes the MBS session ID, MBS description. This step may be made in the application level.

In step 203, the UE sends a PDU session modification request (including the MBS session ID) to join the multicast MBS session. The MBS session ID indicates the multicast group the UE wants to join.

In step 204, the AMF invokes a Nsmf_PDUSession_UpdateSMContext request service operation to forward the UE request to the SMF.

In step 205, according to the received MBS session ID, the SMF recognizes the request is an MBS session join request. The SMF authorizes the MBS session join request. If the SMF does not know which MB-SMF controls this MBS session, the SMF checks with the NRF to find the MB-SMF.

In step 206, the SMF invokes a Nmbsmf_MBSSession_Create request (including the MBS session ID) to MB-SMF. The SMF interacts with the MB-SMF to retrieve multicast QoS flow information of the indicated MBS session.

In step 207, the SMF responds to AMF through a Nsmf_PDUSession_UpdateSMContext response (e.g. including N2 SM information (e.g. PDU session ID, MBS session ID, the MB-SMF ID, multicast QoS flow information, updated PDU session information, mapping between unicast QoS flow and multicast QoS flow information) and/or N1 SM container (e.g. PDU session modification command)) to the AMF.

In step 208, the AMF sends the N2 message to the NG-RAN, where the N2 message includes N2 SM information and N1 SM container received from the SMF. The NG-RAN node may perform:
- creating an MBS session context for the indicated MBS session in the RAN, if it does not exist already; and
- storing the mapping information between the multicast context and the PDU session of the UE to the RAN.

Note that, if the NG-RAN has already established the shared delivery with the MB-SMF/MB-UPF, steps 209 to 212 are not performed.

In addition, if a multicast transport mechanism is used for shared delivery, steps 209 to 212 are not performed. When the multicast transport mechanism is adopted, the NG-RAN sends IGMP/MLD (Internet Group Management Protocol/ Multicast Listener Discovery) join request to join a multicast distribution tree.

If a unicast transport mechanism is used for shared delivery, steps 209 to 212 are performed.

In step 209, the NG-RAN signals, towards the AMF, an N2 message and the information for establishing the tunnel for downlink (DL) MBS transmissions. The N2 message includes the MB-SMF ID and the MBS session ID. If the NG-RAN node uses a unicast transport for shared delivery, the NG-RAN node allocates a DL tunnel ID for the reception of MBS data and includes the DL tunnel information in the request.

In step 210, the AMF invokes a Nnbsmf_MBSSession_Create request (comprising MBS session ID, tunnel info) towards the MB-SMF according to the received MB-SMF ID. If the NG-RAN node sends the DL tunnel information to the AMF, the AMF forwards the DL tunnel information to the MB-SMF.

In step 211, if the DL tunnel information is included, the MB-SMF configures the MB-UPF to transmit the MBS data for multicast towards the NG-RAN. The MB-SMF responds to the AMF through a Nmbsmf_MBSSession_Create response.

In step 212, the AMF forwards the N2 message to the NG-RAN node according to the N2 SM container in the received Nmbsmf_MBSSession_Create response.

In step 213, the NG-RAN issues an AN-specific signaling exchange with the UE that is related with the MBS session resource reconfiguration. As part of the AN specific signaling exchange, the N1 SM container is provided to the UE.

After step 213, the NEF/AF is able to transmit the multicast service data to the UE via the NG-RAN node.

The local MBS is the MBS provided in particular MBS area(s). The MBS area may be identified by a cell list or a tracking area list. Only the UE within the MBS area may receive the content data of the local MBS. When moving out of the MBS area, the UE is not allowed to receive the content data of local MBS.

For the multicast MBS, the UE outside of one MBS area is not allowed to join this MBS and the network shall not deliver local MBS data to the UEs moving out of the corresponding MBS area.

In an embodiment, the local MBS is also called location-dependent MBS.

The location dependent MBS is the local MBS that is provided in several MBS areas. The location dependent MBS enables distributions of different content data to different MBS areas.

In an embodiment, the MBS session ID is used to identify the MBS session. In addition, an additional area session ID is used for each MBS area. That is, the area session ID in combination with the MBS session ID uniquely identify the area of the MBS within the 5GS.

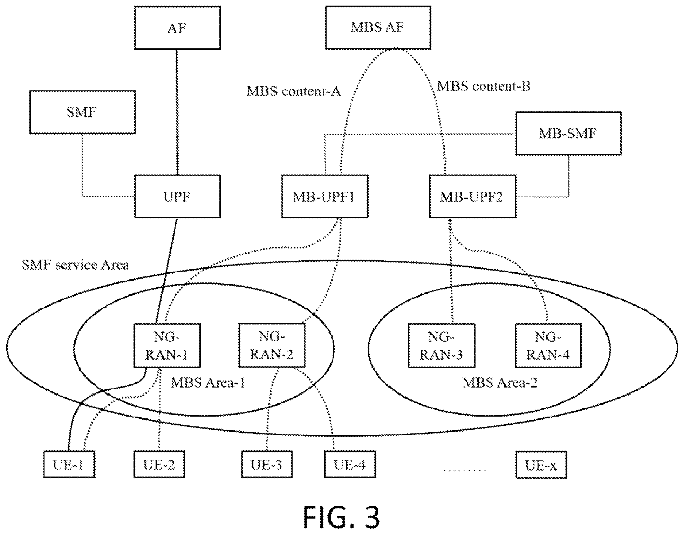

FIG. 3 shows a schematic diagram of location dependent MBS and the unicast PDU session according to an embodiment of the present disclosure.

In FIG. 3, a path of transmitting data of the unicast PDU session to UE-1 is AF→UPF→NG-RAN-1→UE-1. In addition, the SMF service area includes the NG-RAN-1 to NG-RAN-4. That is, the UPF may send the data of the unicast PDU session to separate UE separately through one of the NG-RAN-1 to NG-RAN-4.

In an embodiment, an MBS session is identified by MBS session ID: MBS-A. There are two MBS areas for the same MBS session MBS-A.

MBS area-1 consists of NG-RAN-1 and NG-RAN-2. The MBS area-1 is identified by Area-ID-1.

MBS area-2 consists of NG-RAN-3 and NG-RAN-4. The MBS area-2 is identified by Area-ID-2.

The different content data of the MBS-A may be distributed to different MBS areas of the same MBS session (i.e. MBS-A), e.g., via dotted lines. For example, the MBS content-A is sent to the MBS area-1 (MB-UPF1 to NG-RAN-1 and NG-RAN-2) and MBS content-B is sent to MBS area-2 (MB-UPF2 to NG-RAN-3 and NG-RAN2-4). For MBSs that are not location dependent, the procedure is equivalent with one MBS area. Thus, area-ID is not needed in this case.

Note that the UE may not be aware of the MBS.

During the multicast MBS session establishment, the MB-SMF may determine and send MBS session area information and corresponding area session ID(s) to the SMF.

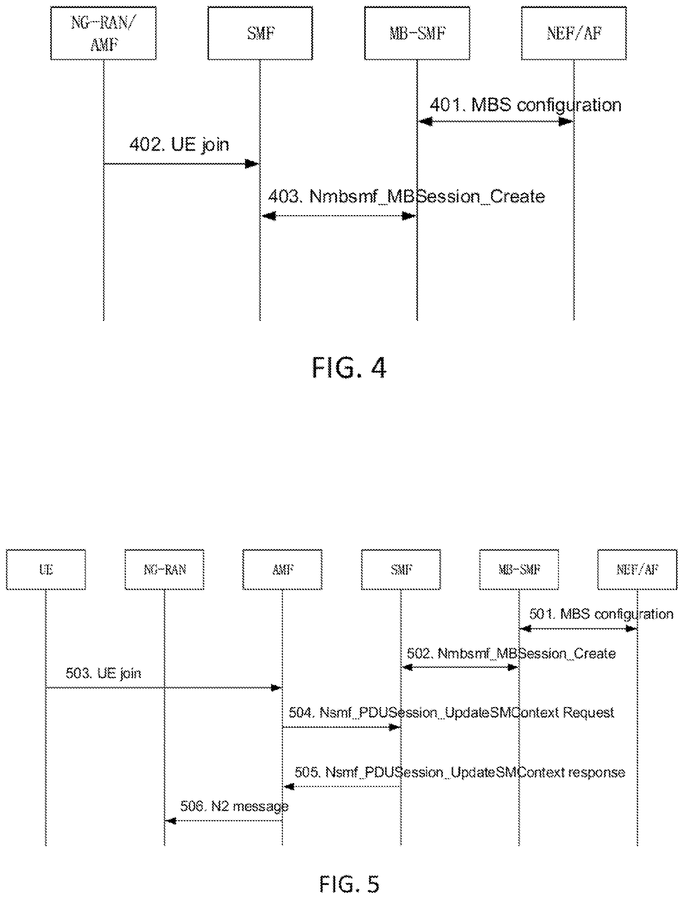

FIG. 4 shows a schematic diagram of a procedure according to an embodiment of the present disclosure. The procedure shown in FIG. 4 illustrates an example on how the SMF gets the multicast MBS session area information. The procedure shown in FIG. 4 is based on the procedure shown in FIG. 2.

In particular, step 401 is similar to step 201. In FIG. 4, the AF further provides the multicast MBS session area information to the NEF. The NEF converts the received multicast MBS session area information to 5GS internal location area information (e.g. TAI list or cell list) and provides the location area information to the MB-SMF.

Step 402 is the same as steps 203 and 204.

Step 403 is similar to step 206. Note that the MB-SMF in FIG. 4 further provides the 5GS area information associated with the MBS session to the SMF, wherein the 5GS area information includes the MBS session ID and the area ID.

The SMF may not know the correlation between NG-RAN and MBS area if there are multiple MBS areas in single SMF area. As shown in the FIG.3, the SMF service area is bigger than the MBS area(s), i.e. the SMF service area may contain multiple MBS areas. Therefore, according to embodiments of the present disclosure, the SMF may know the relation between NG-RAN and MBS area when a UE joins the multicast MBS session, and a shared delivery to NG-RAN may depend on the MBS area to that the NG-RAN belongs.

In an embodiment, the MB-SMF allocates an area session ID corresponding to the location area, for the location dependent MBS session. Thus, there is no area overlapping between two area session IDs.

In the present disclosure, the area session ID may be equal to area ID.

In an embodiment, the MB-SMF sends each area session ID and associated MBS area(s) to the SMF for the related MBS session (identified by MBS session ID).

In an embodiment, if multicast transport is used, the MB-SMF may send a multicast address for each area session ID to the SMF.

In an embodiment, during a UE join procedure (e.g. when the UE switches from idle state to connected stat), the SMF sends the MB-SMF ID, MBS session ID and area session ID and the corresponding location area information to the NG-RAN according to the UE's current location, i.e. NG-RAN ID. If multicast transport is used, the SMF may also send a multicast address of the corresponding area session ID to the NG-RAN.

In an embodiment, the NG-RAN initiates MBS session setup. The NG_RAN sends a N2 message to the AMF, which contains MB-SMF ID, MBS session ID, area session ID and NG-RAN ID. If unicast transport is used, the NG-RAN may also send the DL tunnel information (info) in the N2 message.

In an embodiment, the AMF invokes a Nnbsmf_MBSSession_Create request (e.g. comprising MBS session ID and area session ID) towards the MB-SMF according to the received MB-SMF ID. If the NG-RAN node sends the DL tunnel information to the AMF, the AMF forwards it to the MB-SMF.

In an embodiment, if the unicast transport is used, the MB-SMF selects the MB-UPF according to the area session ID.

In an embodiment, if the multicast transport is used, the MB-SMF may send the multicast address to the NG-RAN via the AMF according to the received area session ID.

In an embodiment, if the multicast transport is used, the NG-RAN can send IGMP/MLD (Internet Group Management Protocol/ Multicast Listener Discovery) join request to the multicast address.

The FIG. 5 shows how the MBS info is provided to the SMF, when the UE sends the UE join message to the AMF, and how the SMF sends the MBS information to the NG-RAN in accordance with an embodiment of the present disclosure.

At step 501 the AF requests the multicast MBS to the NEF (including service requirement and MBS area). The NEF finds an MB-SMF, which can control this MBS session. The MB-SMF allocates the MBS session ID for the multicast MBS and returns the MBS session ID to the NEF/AF. The NEF converts the MBS area to 5GS internal location area information, e.g. TAI list or cell list, and provides this location area information to the MB-SMF.

The MB-SMF allocates the area session ID to the corresponding location area information. For example: (area ID-1, cell list-1), (area ID-2, cell list-2).

In general, there is no area overlapping between two area session IDs, e.g. cell-1 is only assigned to area-1 or area-2 and may not belong to both area-1 and area-2.

If the multicast transport is used, the multicast address is assigned for each area session ID.

At step 502 the SMF invokes Nmbsmf_MBSSession_Create request (comprising MBS session ID) to the MB-SMF. The SMF interacts with the MB-SMF to retrieve multicast QoS flow information of the indicated MBS session. The MB-SMF sends each area session ID and associated MBS area to the SMF for the MBS session.

If multicast transport is used, the MB-SMF may also send a multicast address for each area session ID to the SMF.

Step 502 may be triggered by the first UE join message (i.e. steps 503, 504).

At step 503 the UE sends the UE join message (e.g. PDU session modification request) comprising MBS session ID to join the multicast MBS session. Note that, the MBS session ID indicates the multicast group the UE wants to join.

At step 504 the AMF invokes the Nsmf_PDUSession_UpdateSMContext request service operation to forward the UE join message to the SMF.

At step 505, according to the received MBS session ID, the SMF recognizes that this is a MBS session join request. If the UE is the first UE to join the MBS session, the SMF checks the MB-SMF and step 502 is performed.

The SMF responds to the AMF through a Nsmf_PDUSession_UpdateSMContext response (N2 SM information (PDU session ID, MBS session ID, MB-SMF ID, area session ID and the corresponding location area information, multicast QoS flow information, updated PDU session information, mapping between unicast QoS flow and multicast QoS flow information), N1 SM container (e.g. PDU session modification command)) to AMF.

If multicast transport is used, N2 SM information may include a multicast address for the area session ID if the multicast address is received from the MB-SMF.

At step 506 the AMF sends the N2 message to the NG-RAN, which includes N2 SM information and N1 SM container received from the SMF.

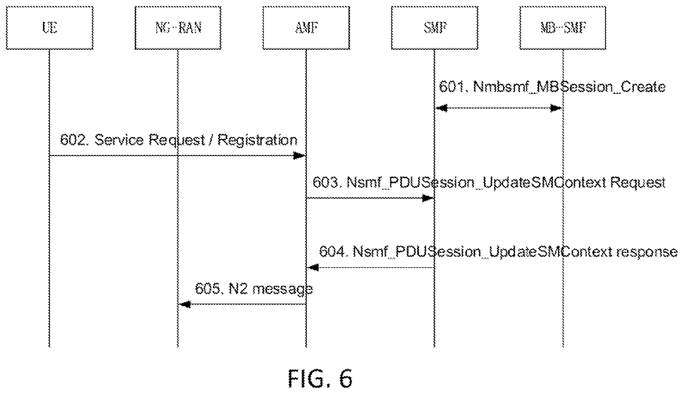

FIG. 6 shows how the MBS info is provided to the SMF and the NG-RAN when the UE performs the service request and registration procedure according to an embodiment of the present disclosure. For simplicity and a better understanding unrelated steps have been omitted in FIG. 6.

Before step 601, step 501 may be performed. Step 601 may be the same as step 502.. In particular, the SMF invokes Nmbsmf_MBSSession_Create request (comprising MBS session ID) to the MB-SMF. The SMF interacts with the MB SMF to retrieve multicast QoS flow information of the indicated MBS session. The MB-SMF sends each area session ID and associated MBS area to the SMF for the MBS session.

If multicast transport is used, the MB-SMF may also send a multicast address for each area session ID to the SMF.

At step 602 the UE has joined the MBS session (cf. FIG. 5) already and is in idle mode now. The UE sends the service request or registration to the AMF to enter into the connected state from the idle state.

Step 603 is similar to step 504, wherein the AMF invokes the Nsmf_PDUSession_UpdateSMContext request service operation to the SMF.

At step 604 the SMF recognizes that the UE has joined the MBS session already. Step 604 is similar to step 505, wherein the SMF responds to the AMF through Nsmf_PDUSession_UpdateSMContext response (N2 SM information (PDU session ID, MBS session ID, MB-SMF ID, area session ID and the corresponding location area information, multicast QoS flow information, updated PDU session information, mapping between unicast QoS flow and multicast QoS flow information), N1 SM container (PDU session modification command) to the AMF.

If multicast transport is used, N2 SM information may include a multicast address for the area session if received form the MB-SMF.

Step 605 is the same as step 506, wherein the AMF sends the N2 message to the NG-RAN, which includes N2 SM information and N1 SM container received from the SMF.

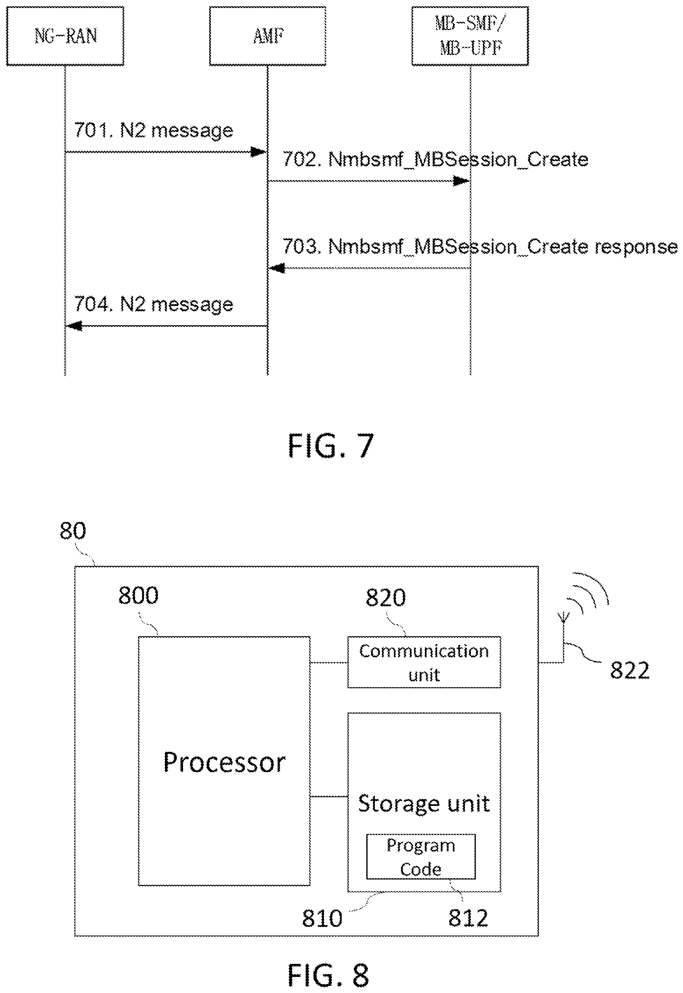

FIG. 7 shows how the shared delivery is established between NG-RAN and MB-SMF/MB-UPF according to an embodiment of the present disclosure.

After step 506 or 605, if the shared delivery is not established between the NG-RAN and the MB-SMF/MB-UPF for the MBS session, steps 701 to 704 are performed.

At step 701 the NG-RAN signals a N2 message towards the AMF and the information for establishing the tunnel for DL MBS transmission. The N2 message includes the MB-SMF ID, MBS session ID, area session ID and NG-RAN ID. If the NG-RAN node uses a unicast transport for shared delivery, it allocates a downlink tunnel ID for the reception of MBS data and includes the downlink tunnel information in the request.

At step 702 the AMF invokes Nnbsmf_MBSSession_Create request (MBS session ID, area session ID) towards the MB-SMF according to the received MB-SMF ID. If the NG-RAN node sends the DL tunnel information to the AMF, the AMF forwards it to the MB-SMF. The AMF may also send the NG-RAN ID to the SMF.

At step 703 the MB-SMF responds to the AMF through a Nmbsmf_MBSSession_Create response. If downlink tunnel information is included, the MB-SMF selects appropriate MB-UPF and configures MB-UPF to transmit the MBS data for multicast towards the NG-RAN. If the multicast transport is used, the MB-SMF may also include the multicast address for the MBS session in the response.

At step 704 the AMF forwards the N2 message to the NG-RAN node according to the N2 SM container in the received Nmbsmf_MBSSession_Create response.

If the NG-RAN receives the multicast address in the N2 message, it sends the IGMP/MLD join request to join the multicast distribution tree to receive the media.

In an embodiment, the MB-SMF sends each area session ID and associated MBS area to the SMF for the related MBS session (identified by the MBS session ID).

In an embodiment, if multicast transport is used, the MB-SMF may send a multicast address for each area session ID to the SMF.

In an embodiment, the SMF sends the MB-SMF ID, the MBS session ID and the area session ID and the corresponding location area information to the NG-RAN.

In an embodiment, the NG-RAN sends a N2 message to the AMF, which contains the MB-SMF ID, the MBS session ID, the area session ID and the NG-RAN ID.

In an embodiment, the AMF invokes a Nnbsmf_MBSSession_Create request (MBS session ID, area session ID) towards the MB-SMF.

In an embodiment, if unicast transport is used, the MB-SMF selects the MB-UPF according to the area session ID.

In an embodiment, if multicast transport is used, the MB-SMF sends the multicast address to the NG-RAN via the AMF according to the received area session ID.

FIG. 8 relates to a schematic diagram of a wireless terminal 80 according to an embodiment of the present disclosure. The wireless terminal 80 may be a user equipment (UE), a mobile phone, a laptop, a tablet computer, an electronic book or a portable computer system and is not limited herein. The wireless terminal 80 may include a processor 800 such as a microprocessor or Application Specific Integrated Circuit (ASIC), a storage unit 810 and a communication unit 820. The storage unit 810 may be any data storage device that stores a program code 812, which is accessed and executed by the processor 800. Embodiments of the storage unit 812 include but are not limited to a subscriber identity module (SIM), read-only memory (ROM), flash memory, random-access memory (RAM), hard-disk, and optical data storage device. The communication unit 820 may a transceiver and is used to transmit and receive signals (e.g. messages or packets) according to processing results of the processor 800. In an embodiment, the communication unit 820 transmits and receives the signals via at least one antenna 822 shown in FIG. 8.

In an embodiment, the storage unit 810 and the program code 812 may be omitted and the processor 800 may include a storage unit with stored program code.

The processor 800 may implement any one of the steps in exemplified embodiments on the wireless terminal 80, e.g., by executing the program code 812.

The communication unit 820 may be a transceiver. The communication unit 820 may as an alternative or in addition be combining a transmitting unit and a receiving unit configured to transmit and to receive, respectively, signals to and from a wireless network node (e.g. a base station).

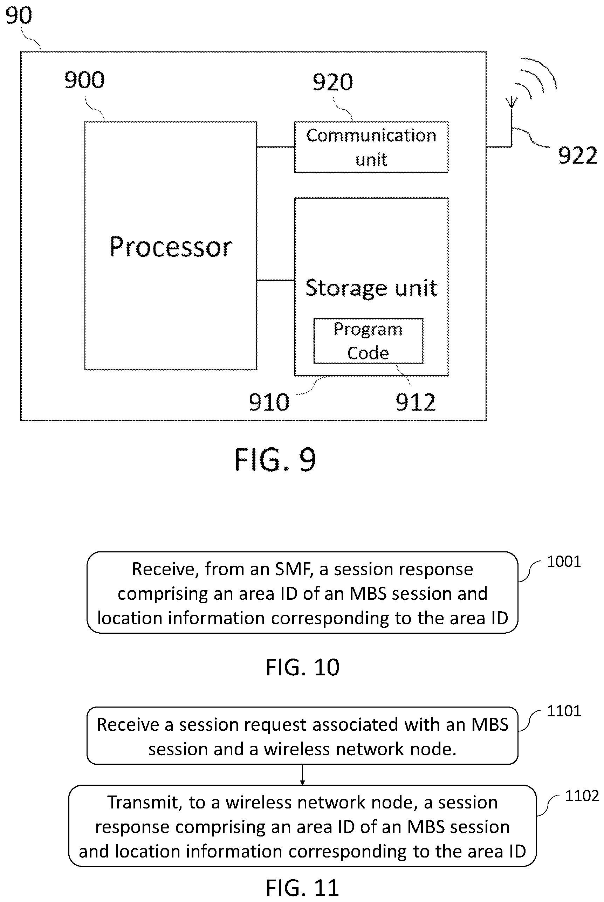

FIG. 9 relates to a schematic diagram of a wireless network node 90 according to an embodiment of the present disclosure. The wireless network node 90 may be a satellite, a base station (BS), a network entity, a Mobility Management Entity (MME), Serving Gateway (S-GW), Packet Data Network (PDN) Gateway (P-GW), a radio access network (RAN) node, a next generation RAN (NG-RAN) node, a gNB, an eNB, a gNB central unit (gNB-CU), a gNB distributed unit (gNB-DU) a data network, a core network or a Radio Network Controller (RNC), and is not limited herein. In addition, the wireless network node 90 may comprise (perform) at least one network function such as an access and mobility management function (AMF), a session management function (SMF), a user place function (UPF), a policy control function (PCF), an application function (AF), etc. The wireless network node 90 may include a processor 900 such as a microprocessor or ASIC, a storage unit 910 and a communication unit 920. The storage unit 910 may be any data storage device that stores a program code 912, which is accessed and executed by the processor 900. Examples of the storage unit 912 include but are not limited to a SIM, ROM, flash memory, RAM, hard-disk, and optical data storage device. The communication unit 920 may be a transceiver and is used to transmit and receive signals (e.g. messages or packets) according to processing results of the processor 900. In an example, the communication unit 920 transmits and receives the signals via at least one antenna 922 shown in FIG. 9.

In an embodiment, the storage unit 910 and the program code 912 may be omitted. The processor 900 may include a storage unit with stored program code.

The processor 900 may implement any steps described in exemplified embodiments on the wireless network node 90, e.g., via executing the program code 912.

The communication unit 920 may be a transceiver. The communication unit 920 may as an alternative or in addition be combining a transmitting unit and a receiving unit configured to transmit and to receive, respectively, signals to and from a wireless terminal (e.g. a user equipment or another wireless network node).

FIG. 10 shows a flowchart of a method according to an embodiment of the present disclosure. The method shown in FIG. 10 may be used in a wireless network node (e.g. NG-RAN) and comprises the following step:
Step 1001: Receive, from an SMF, a session response comprising an area ID of an MBS session and location information corresponding to the area ID.

In FIG. 10, the wireless network node receives a session response comprising an area ID of an MBS session (i.e. MBS area ID) and location information corresponding to the area ID. In an embodiment, the wireless network node may transmit a session request (e.g. UE join message) to the SMF before receiving the session response, to join the MBS session. For example, the wireless network node may transfer the session request received from a UE to the SMF. In an embodiment, the location information comprises at least one of a TAI list associated with the area ID, a cell list associated with the area ID or a multicast address associated with the area ID.

In an embodiment, the wireless network node may transmit a request of establishing a downlink tunnel for the MBS session to an MB-SMF. Note that, the request comprises the area ID. In response to this request, the wireless network may receive a response comprising the multicast address associated with the area ID if the multicast transport is adopted.

FIG. 11 shows a flowchart of a method according to an embodiment of the present disclosure. The method shown in FIG. 11 may be used in an SMF (e.g. a wireless device comprising/performing all of functionalities of the SMF) and comprises the following steps:
Step 1101: Receive a session request associated with an MBS session and a wireless network node.
Step 1102: Transmit, to the wireless network node, a session response comprising an area ID of the MBS session and location information corresponding to the area ID.

In FIG. 11, the SMF receives receive a session request (e.g. UE join message) associated with an MBS session and a wireless network node (e.g. NG-RAN). The session request may be received from a UE and/or via the wireless network node. In response to the session request, the SMF transmits a session response comprising an area ID of the MBS session and location information corresponding to the area ID. In an embodiment, the location information comprises at least one of a TAI list associated with the area ID, a cell list associated with the area ID or a multicast address associated with the area ID.

In an embodiment, the SMF receives/acknowledges information of a correlation between each area ID associated with the MBS session and corresponding location information (e.g. (area ID-1, cell list-1), (area ID-2, cell list-2) and so on).

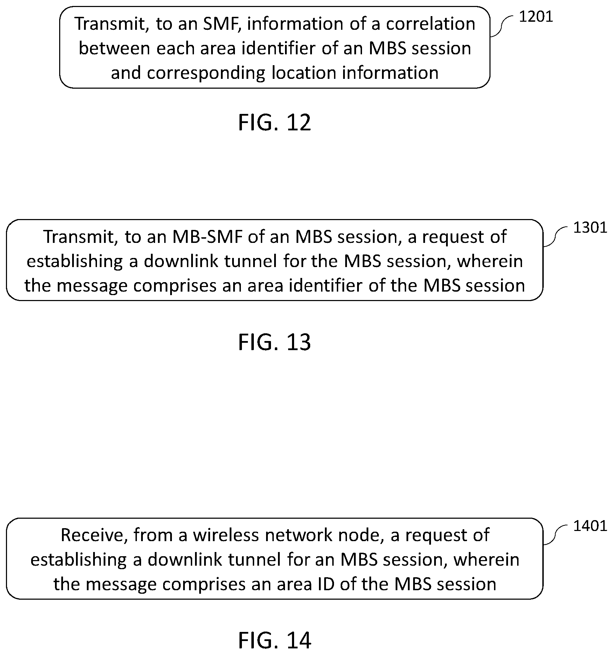

FIG. 12 shows a flowchart of a method according to an embodiment of the present disclosure. The method shown in FIG. 12 may be used in an MB-SMF (e.g. a wireless device comprising/performing all of functionalities of the MB-SMF) and comprises the following step:
Step 1201: Transmit, to an SMF, information of a correlation between each area identifier of an MBS session and corresponding location information.

In FIG. 12, the MB-SMF let the SMF acknowledge information of a correlation between each area identifier of an MBS session and corresponding location information. In an embodiment, the location information comprises at least one of a TAI list associated with the area ID, a cell list associated with the area ID or a multicast address associated with the area ID.

FIG. 13 shows a flowchart of a method according to an embodiment of the present disclosure. The method shown in FIG. 13 may be used in a wireless network node (e.g. NG-RAN) and comprises the following step:
Step 1301: Transmit, to an MB-SMF of an MBS session, a request of establishing a downlink tunnel for the MBS session, wherein the message comprises an area identifier of the MBS session.

In FIG. 13, the wireless network node transmits a request of establishing a downlink tunnel for an MBS session to an MB-SMF of the MBS session, e.g., via an AMF. In this embodiment, the message comprises an area ID of the MBS session. In an embodiment, the request further comprises downlink tunnel information associated with the area ID.

In an embodiment of the multicast transport being used, the wireless network node may receive a response comprising a multicast address associated with the area ID from the MB-SMF.

FIG. 14 shows a flowchart of a method according to an embodiment of the present disclosure. The method shown in FIG. 14 may be used in an MB-SMF (e.g. a wireless device comprising/performing all of functionalities of the MB-SMF) and comprises the following step:
Step 1401: Receive, from a wireless network node, a request of establishing a downlink tunnel for an MBS session, wherein the message comprises an area ID of the MBS session.

In this embodiment, the MB-SMF receives a request of establishing a downlink tunnel for an MBS session from a wireless network node (e.g. NG-RAN). For example, the request is received via an AMF. Note that, the request comprises an area ID of the MBS session.

In an embodiment of the multicast transport being used, the wireless network node may transmit a response comprising a multicast address associated with the area ID to the wireless network node.

In an embodiment, the request may comprise downlink tunnel information associated with the area ID. Based on the area ID and the downlink tunnel information, the MB-SMF selects an UPF for transmitting downlink data of the MBS session to the wireless network node.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A wireless communication method for use in a wireless network node (90), the method comprising:
receiving, from a session management function, a session response comprising an area identifier of a multicast broadcast service, MBS, session and location information corresponding to the area identifier, and
transmitting, to a multicast broadcast session management function of the MBS session, a request of establishing a downlink tunnel for the MBS session, wherein the message comprises the area identifier,
wherein the location information comprises at least one of a tracking area identity list associated with the area identifier, a cell list associated with the area identifier or a multicast address associated with the area identifier.

2. The wireless communication method of claim 1, further comprising:
receiving, from the multicast broadcast session management function, a response comprising a multicast address associated with the area identifier.

3. A wireless communication method for use in a session management function, the method comprising:
receiving a session request associated with a multicast broadcast service, MBS, session and a wireless network node (90), and
transmitting, to the wireless network node (90), a session response comprising an area identifier of the MBS session and location information corresponding to the area identifier; and
receiving, from a multicast broadcast session management function, information of a correlation between each area identifier associated with the MBS session and corresponding location information,
wherein the location information comprises at least one of a tracking area identity list associated with the area identifier, a cell list associated with the area identifier or a multicast address associated with the area identifier.

4. A wireless communication method for use in a multicast broadcast session management function, the method comprising: transmitting, to a session management function, information of a correlation between each area identifier of a multicast broadcast service, MBS, session and corresponding location information, and
receiving, from a wireless network node (90), a request of establishing a downlink tunnel for the MBS session, wherein the message comprises the area identifier,
wherein the location information comprises at least one of a tracking area identity list associated with the area identifier, a cell list associated with the area identifier or a multicast address associated with the area identifier.

5. A wireless network node (90), comprising:
a communication unit (920), configured to:
receive, from a session management function, a session response comprising an area identifier of a multicast broadcast service, MBS, session and location information corresponding to the area identifier, and
transmit, to a multicast broadcast session management function of the MBS session, a request of establishing a downlink tunnel for the MBS session, wherein the message comprises the area identifier,
wherein the location information comprises at least one of a tracking area identity list associated with the area identifier, a cell list associated with the area identifier or a multicast address associated with the area identifier.

6. The wireless network node (90) of claim 5, further comprising a processor configured to perform a wireless communication method of claim 2.

7. A wireless device (80) comprising a session management function, the wireless device (80) comprising:
a communication unit (820), configured to:
receive a session request associated with a multicast broadcast service, MBS, session and a wireless network node (90), and
transmit, to the wireless network node (90), a session response comprising an area identifier of the MBS session and location information corresponding to the area identifier transmit data in a first period; and
receive, from a multicast broadcast session management function, information of a correlation between each area identifier associated with the MBS session and corresponding location information,
wherein the location information comprises at least one of a tracking area identity list associated with the area identifier, a cell list associated with the area identifier or a multicast address associated with the area identifier.

8. A wireless device (80) comprising a multicast broadcast session management function, the wireless device (80) comprising:
a communication unit (820), configured to: transmit, to a session management function, information of a correlation between each area identifier of a multicast broadcast service, MBS, session and corresponding location information, and
receive, from a wireless network node (90), a request of establishing a downlink tunnel for the MBS session, wherein the message comprises the area identifier,
wherein the location information comprises at least one of a tracking area identity list associated with the area identifier, a cell list associated with the area identifier or a multicast address associated with the area identifier.

9. A computer program product comprising a computer-readable program medium code stored thereupon, the code, when executed by a processor (800, 900), causing the processor (800, 900) to implement a wireless communication method recited in any one of claims 1 to 2 or 3 or 4.

## Patentansprüche

1. Drahtloses Kommunikationsverfahren zur Verwendung in einem drahtlosen Netzwerkknoten (90), das Verfahren umfassend:
Empfangen, von einer Sitzungsverwaltungsfunktion, einer Sitzungsantwort, aufweisend eine Bereichskennung einer Multicast-Broadcast-Service-, MBS-, Sitzung und der Bereichskennung entsprechende Standortinformationen, und
Übertragen, an eine Multicast-Broadcast-Sitzungsverwaltungsfunktion der MBS-Sitzung, einer Anforderung zum Einrichten eines Downlink-Tunnels für die MBS-Sitzung, wobei die Nachricht die Bereichskennung aufweist,
wobei die Standortinformationen mindestens eines von einer Nachverfolgungsbereich-Identitätsliste, die der Bereichskennung zugeordnet ist, einer Zellenliste, die der Bereichskennung zugeordnet ist, oder einer Multicast-Adresse, die der Bereichskennung zugeordnet ist, umfassen.

2. Drahtloses Kommunikationsverfahren nach Anspruch 1, ferner umfassend:
Empfangen, von der Multicast-Broadcast-Sitzungsverwaltungsfunktion, einer Antwort, aufweisend eine Multicast-Adresse, die der Bereichskennung zugeordnet ist.

3. Drahtloses Kommunikationsverfahren zur Verwendung in einer Sitzungsverwaltungsfunktion, das Verfahren umfassend:
Empfangen einer Sitzungsanforderung, die einer Multicast-Broadcast-Service-, MBS-, Sitzung und einem drahtlosen Netzwerkknoten (90) zugeordnet ist, und
Übertragen, an den drahtlosen Netzwerkknoten (90), einer Sitzungsantwort, aufweisend eine Bereichskennung der MBS-Sitzung und der Bereichskennung entsprechende Standortinformationen; und
Empfangen, von einer Multicast-Broadcast-Sitzungsverwaltungsfunktion, von Informationen über eine Korrelation zwischen jeder der MBS-Sitzung zugeordneten Bereichskennung und entsprechenden Standortinformationen,
wobei die Standortinformationen mindestens eines von einer Nachverfolgungsbereich-Identitätsliste, die der Bereichskennung zugeordnet ist, einer Zellenliste, die der Bereichskennung zugeordnet ist, oder einer Multicast-Adresse, die der Bereichskennung zugeordnet ist, umfassen.

4. Drahtloses Kommunikationsverfahren zur Verwendung in einer Multicast-Broadcast-Sitzungsverwaltungsfunktion, das Verfahren umfassend: Übertragen, an eine Sitzungsverwaltungsfunktion, von Informationen über eine Korrelation zwischen jeder Bereichskennung einer Multicast-Broadcast-Service-, MBS-, Sitzung und entsprechenden Standortinformationen, und
Empfangen, von einem drahtlosen Netzwerkknoten (90), einer Anforderung zum Einrichten eines Downlink-Tunnels für die MBS-Sitzung, wobei die Nachricht die Bereichskennung aufweist,
wobei die Standortinformationen mindestens eines von einer Nachverfolgungsbereich-Identitätsliste, die der Bereichskennung zugeordnet ist, einer Zellenliste, die der Bereichskennung zugeordnet ist, oder einer Multicast-Adresse, die der Bereichskennung zugeordnet ist, umfassen.

5. Drahtloser Netzwerkknoten (90), umfassend:
eine Kommunikationseinheit (920), die konfiguriert ist zum:
Empfangen, von einer Sitzungsverwaltungsfunktion, einer Sitzungsantwort, aufweisend eine Bereichskennung einer Multicast-Broadcast-Service-, MBS-, Sitzung und der Bereichskennung entsprechende Standortinformationen, und
Übertragen, an eine Multicast-Broadcast-Sitzungsverwaltungsfunktion der MBS-Sitzung, einer Anforderung zum Einrichten eines Downlink-Tunnels für die MBS-Sitzung, wobei die Nachricht die Bereichskennung aufweist,
wobei die Standortinformationen mindestens eines von einer Nachverfolgungsbereich-Identitätsliste, die der Bereichskennung zugeordnet ist, einer Zellenliste, die der Bereichskennung zugeordnet ist, oder einer Multicast-Adresse, die der Bereichskennung zugeordnet ist, umfassen.

6. Drahtloser Netzwerkknoten (90) nach Anspruch 5, ferner umfassend einen Prozessor, der konfiguriert ist, um ein drahtloses Kommunikationsverfahren nach Anspruch 2 durchzuführen.

7. Drahtlose Vorrichtung (80), umfassend eine Sitzungsverwaltungsfunktion, die drahtlose Vorrichtung (80) umfassend:
eine Kommunikationseinheit (820), die konfiguriert ist zum:
Empfangen einer Sitzungsanforderung, die einer Multicast-Broadcast-Service-, MBS-, Sitzung und einem drahtlosen Netzwerkknoten (90) zugeordnet ist, und
Übertragen, an den drahtlosen Netzwerkknoten (90), einer Sitzungsantwort, aufweisend eine Bereichskennung der MBS-Sitzung und Standortinformationen entsprechend den Bereichskennungs-Übertragungsdaten in einem ersten Zeitraum; und
Empfangen, von einer Multicast-Broadcast-Sitzungsverwaltungsfunktion, von Informationen über eine Korrelation zwischen jeder der MBS-Sitzung zugeordneten Bereichskennung und entsprechenden Standortinformationen,
wobei die Standortinformationen mindestens eines von einer Nachverfolgungsbereich-Identitätsliste, die der Bereichskennung zugeordnet ist, einer Zellenliste, die der Bereichskennung zugeordnet ist, oder einer Multicast-Adresse, die der Bereichskennung zugeordnet ist, umfassen.

8. Drahtlose Vorrichtung (80), umfassend eine Multicast-Broadcast-Sitzungsverwaltungsfunktion, die drahtlose Vorrichtung (80) aufweisend:
eine Kommunikationseinheit (820), die konfiguriert ist zum: Übertragen, an eine Sitzungsverwaltungsfunktion, von Informationen einer Korrelation zwischen jeder Bereichskennung einer Multicast-Broadcast-Service-, MBS-, Sitzung und entsprechenden Standortinformationen, und
Empfangen, von einem drahtlosen Netzwerkknoten (90), einer Anforderung zum Einrichten eines Downlink-Tunnels für die MBS-Sitzung, wobei die Nachricht die Bereichskennung aufweist,
wobei die Standortinformationen mindestens eines von einer Nachverfolgungsbereich-Identitätsliste, die der Bereichskennung zugeordnet ist, einer Zellenliste, die der Bereichskennung zugeordnet ist, oder einer Multicast-Adresse, die der Bereichskennung zugeordnet ist, umfassen.

9. Computerprogrammprodukt, umfassend einen darauf gespeicherten computerlesbaren Programmmediumcode, wobei der Code, wenn er durch einen Prozessor (800, 900) ausgeführt wird, den Prozessor (800, 900) veranlasst, ein drahtloses Kommunikationsverfahren nach einem der Ansprüche 1 bis 2 oder 3 oder 4 zu implementieren.

## Revendications

1. Procédé de communication sans fil à utiliser dans un nœud de réseau sans fil (90), le procédé comprenant :
la réception, à partir d'une fonction de gestion de session, d'une réponse de session comprenant un identifiant de zone d'une session service de multidiffusion/diffusion, MBS, et des informations d'emplacement correspondant à l'identifiant de zone, et
la transmission, à une fonction de gestion de session de multidiffusion/diffusion de la session MBS, d'une demande d'établissement d'un tunnel de liaison descendante pour la session MBS, dans lequel le message comprend l'identifiant de zone,
dans lequel les informations d'emplacement comprennent au moins l'une parmi une liste d'identités de zone de suivi associée à l'identifiant de zone, une liste de cellules associée à l'identifiant de zone ou une adresse de multidiffusion associée à l'identifiant de zone.

2. Procédé de communication sans fil selon la revendication 1, comprenant en outre :
la réception, à partir de la fonction de gestion de session de multidiffusion/diffusion, d'une réponse comprenant une adresse de multidiffusion associée à l'identifiant de zone.

3. Procédé de communication sans fil destiné à être utilisé dans une fonction de gestion de session, le procédé comprenant :
la réception d'une demande de session associée à une session de service de multidiffusion/diffusion, MBS, et à un nœud de réseau sans fil (90), et
la transmission, au nœud de réseau sans fil (90), d'une réponse de session comprenant un identifiant de zone de la session MBS et des informations d'emplacement correspondant à l'identifiant de zone ; et
la réception, à partir d'une fonction de gestion de session de multidiffusion/diffusion, d'informations d'une corrélation entre chaque identifiant de zone associé à la session MBS et des informations d'emplacement correspondantes,
dans lequel les informations d'emplacement comprennent au moins l'une parmi une liste d'identités de zone de suivi associée à l'identifiant de zone, une liste de cellules associée à l'identifiant de zone ou une adresse de multidiffusion associée à l'identifiant de zone.

4. Procédé de communication sans fil à utiliser dans une fonction de gestion de session de multidiffusion/diffusion, le procédé comprenant : la transmission, à une fonction de gestion de session, d'informations d'une corrélation entre chaque identifiant de zone d'une session de service de multidiffusion/diffusion, MBS, et des informations d'emplacement correspondantes, et
la réception, à partir d'un nœud de réseau sans fil (90), d'une demande d'établissement d'un tunnel de liaison descendante pour la session MBS, dans lequel le message comprend l'identifiant de zone,
dans lequel les informations d'emplacement comprennent au moins l'une parmi une liste d'identités de zone de suivi associée à l'identifiant de zone, une liste de cellules associée à l'identifiant de zone ou une adresse de multidiffusion associée à l'identifiant de zone.

5. Nœud de réseau sans fil (90), comprenant :
une unité de communication (920), configurée pour :
recevoir, à partir d'une fonction de gestion de session, une réponse de session comprenant un identifiant de zone d'une session de service de multidiffusion/diffusion, MBS, et des informations d'emplacement correspondant à l'identifiant de zone, et
transmettre, à une fonction de gestion de session de multidiffusion/diffusion de la session MBS, une demande d'établissement d'un tunnel de liaison descendante pour la session MBS, dans lequel le message comprend l'identifiant de zone,
dans lequel les informations d'emplacement comprennent au moins l'une parmi une liste d'identités de zone de suivi associée à l'identifiant de zone, une liste de cellules associée à l'identifiant de zone ou une adresse de multidiffusion associée à l'identifiant de zone.

6. Nœud de réseau sans fil (90) selon la revendication 5, comprenant en outre un processeur configuré pour réaliser un procédé de communication sans fil selon la revendication 2.

7. Dispositif sans fil (80) comprenant une fonction de gestion de session, le dispositif sans fil (80) comprenant :
une unité de communication (820), configurée pour :
recevoir une demande de session associée à une session de service de multidiffusion/diffusion, MBS, et à un nœud de réseau sans fil (90), et
transmettre, au nœud de réseau sans fil (90), une réponse de session comprenant un identifiant de zone de la session MBS et des informations d'emplacement correspondant aux données de transmission d'identifiant de zone dans une première période ; et
recevoir, à partir d'une fonction de gestion de session de multidiffusion/diffusion, des informations d'une corrélation entre chaque identifiant de zone associé à la session MBS et des informations d'emplacement correspondantes,
dans lequel les informations d'emplacement comprennent au moins l'une parmi une liste d'identités de zone de suivi associée à l'identifiant de zone, une liste de cellules associée à l'identifiant de zone ou une adresse de multidiffusion associée à l'identifiant de zone.

8. Dispositif sans fil (80) comprenant une fonction de gestion de session de multidiffusion/diffusion, le dispositif sans fil (80) comprenant :
une unité de communication (820), configurée pour : transmettre, à une fonction de gestion de session, des informations d'une corrélation entre chaque identifiant de zone d'une session de service de multidiffusion/diffusion, MBS, et des informations d'emplacement correspondantes, et
recevoir, à partir d'un nœud de réseau sans fil (90), une demande d'établissement d'un tunnel de liaison descendante pour la session MBS, dans lequel le message comprend l'identifiant de zone,
dans lequel les informations d'emplacement comprennent au moins l'une parmi une liste d'identités de zone de suivi associée à l'identifiant de zone, une liste de cellules associée à l'identifiant de zone ou une adresse de multidiffusion associée à l'identifiant de zone.

9. Produit-programme d'ordinateur comprenant un code de support de programme lisible par ordinateur stocké sur celui-ci, le code, lorsqu'il est exécuté par un processeur (800, 900), amenant le processeur (800, 900) à mettre en œuvre un procédé de communication sans fil selon l'une quelconque des revendications 1 à 2 ou 3 ou 4.
